# FASCICULE DE BREVET EUROPEEN

(11) **EP 3 535 159 B1**
(45) Date de publication et mention de la délivrance du brevet: **08.06.2022**
(21) Numéro de dépôt: 17797698.2
(22) Date de dépôt: 24.10.2017
(51) Int. Cl.: B60Q 1/00, F21S 43/20, F21S 43/31, F21S 43/237, F21S 43/239

(54) **FEU DE SIGNALISATION DE VÉHICULE AUTOMOBILE**
SIGNALLEUCHTE FÜR KRAFTFAHRZEUG
MOTOR VEHICLE SIGNAL LIGHT

(30) Priorité: 07.11.2016 FR 1660754
(43) Date de publication de la demande: 11.09.2019
(73) Titulaire: PSA Automobiles SA, 78300 Poissy (FR)
(72) Inventeur: PERON, Rodolphe, 95220 Herblay (FR)
(86) Numéro de dépôt international: PCT/FR2017/052919
(87) Numéro de publication internationale: WO 2018/083395

(56) Documents cités:
- EP-A1- 1 757 857
- EP-A1- 2 565 109
- EP-A1- 2 796 318
- EP-A2- 1 577 608
- EP-A2- 2 187 117
- FR-A1- 2 986 305
- JP-A- 2014 235 819
- US-A1- 2004 130 904
- US-S1- D 565 758

## Description

### DOMAINE TECHNIQUE

L'invention se rapporte à un feu de signalisation de véhicule automobile installé sur au moins l'un des angles d'un véhicule automobile, en général sur les quatre angles. Des exemples de projecteurs de signalisation comprennent : les indicateurs de direction, les feux stop, les feux de position et les feux de position diurnes (aussi appelés DRL, acronyme de « Daytime Running Lamp » en terminologie anglaise).

Dans le domaine des feux de signalisation, il est impératif que ceux-ci soient vus par les différents acteurs présents autour du véhicule, à savoir : les autres véhicules automobiles ainsi que les cycles et les piétons, tout en diffusant efficacement leur lumière en consommant le moins possible d'énergie électrique. C'est pourquoi ces feux bénéficient en général les améliorations concernant les économies d'énergie et l'efficacité de la diffusion de lumière. Un exemple d'amélioration est l'utilisation de diodes électroluminescentes ou LED à la place d'ampoules traditionnelles.

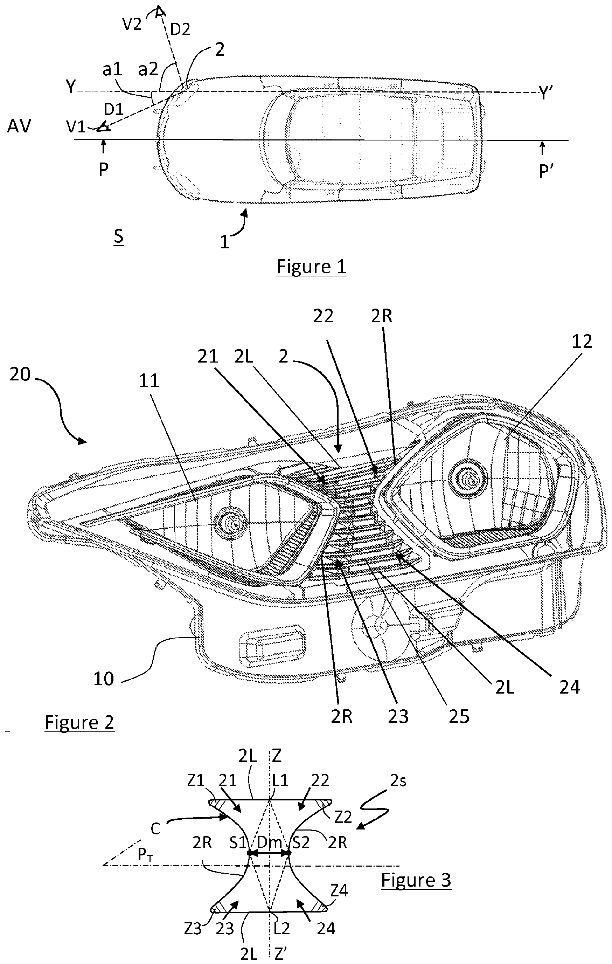

Concernant la réglementation, des angles de visibilité d'un feu de signalisation sont définis au regard de valeurs minimales, comme illustrés par la figure 1. Les angles de visibilité frontale intérieure a1 et latérale extérieure a2 du feu de signalisation 2 du véhicule automobile 1 sont déterminés en référence à un axe longitudinal YY' passant par le centre du feu de signalisation 2, et parallèle au plan de symétrie P-P' du véhicule automobile 1 ainsi qu'au sol « S » sur lequel circule le véhicule 1 (considéré comme plan horizontal de référence).

Les angles de visibilité frontale intérieure a1 et latérale extérieure a2 sont balayés dans un plan horizontal parallèle au sol « S » entre l'axe longitudinal de référence YY' et, respectivement des demi-droites D1 et D2 issues du centre du feu 2.

Dans ce référentiel, la demi-droite D1 dite «orientée vers l'intérieur » (c'est-à-dire orientée à l'avant AV du véhicule vers le plan de symétrie P-P') forme un angle de visibilité frontale a1 de 45° minimal (selon l'oeil de vision V1), avec ±15° réglementaire de visibilité dans un plan vertical perpendiculaire au plan du sol « S ». L'autre demi-droite D2 dite « orientée vers l'extérieur» (c'est-à-dire orientée vers l'avant du véhicule en s'éloignant du plan de symétrie P-P') forme un angle de visibilité latérale (selon l'œil de vision V2) de 80° réglementaire minimal, avec des inclinaisons de visibilité latérale et frontale de ±15° réglementaire dans le plan vertical.

### ÉTAT DE LA TECHNIQUE

Afin de respecter la réglementation et permettre une meilleure visibilité des feux de signalisation, différentes améliorations ont été apportées.

Ainsi, le document de brevet FR 3 016 148 décrit un feu de signalisation comportant un écran monté en pivotement entre une position d'éclairage, dans laquelle l'écran assure le passage à travers la zone de diffusion d'une lumière, et une position inactive. Dans cette position inactive, la face de l'écran en regard de la zone translucide est revêtue d'une couche de matériau ornemental pour donner embellir le feu de signalisation lorsqu'il ne sert pas.

Un autre document de brevet, FR 2 765 312, décrit un feu de signalisation pour véhicule automobile comprenant une source lumineuse ponctuelle et un écran intermédiaire recevant directement la lumière issue de la source, cet écran comportant une série de cellules optiques. Chacune de ces cellules est munie, sur une face intérieure, d'une surface courbe de redressement et d'étalement de la lumière et, sur une face extérieure, de plusieurs facettes planes obliques par rapport à un plan de l'écran intermédiaire. L'effet de cet ensemble de cellules optiques est de fournir un éclairage simulant celui émis à partir d'une pluralité de sources lumineuses.

Par ailleurs, le document de brevet JP 2003115282 décrit un système d'éclairage comportant un écran fluorescent formé à l'intérieur de l'ampoule tubulaire. Ce système d'éclairage offre une augmentation de l'angle de vue et une meilleure la répartition de la lumière émise.

Les documents EP 1 577 608 A2, EP 2 565 109 A1, EP 1 757 857 A1 et US 2004/130904 A1 illustrent les connaissances de l'homme du métier.

### EXPOSÉ DE L'INVENTION

Cependant, ces solutions ne permettent pas de pallier un problème récurrent d'hétérogénéité d'éclairage sur les écrans de feux de signalisation de forme non circulaire.

L'invention vise à résoudre ce problème et, pour ce faire, prévoit, pour des formes de feux non circulaires, d'exploiter les propriétés physiques de réflexion et de diffusion de la lumière afin qu'une source de lumière puisse atteindre des recoins du feu de signalisation.

Plus précisément, la présente invention a pour objet un feu de signalisation conforme à la partie caractérisante de la revendication 1.

Selon des formes de réalisation avantageuses :
- les faces principales présentent des angles de dépouille, ce qui permet d'augmenter l'ouverture angulaire d'inclinaison;
- au moins une lamelle de diffusion présente des faces grainées pour renforcer la diffusion de la lumière et ainsi augmenter l'efficacité de cette diffusion;
- le réflecteur présente également un contour biconcave à quatre avancées en pointe semblables à celles de l'écran translucide délimitant une face de réflexion formée au moins partiellement d'une matrice de cellules élémentaires bombées vers l'écran translucide pour augmenter la diffusion de la lumière ;
- la face de réflexion étant formée partiellement de la matrice de cellules élémentaires bombées, une portion métallisée est formée sur le reste du réflecteur en complément de la matrice;
- la portion de face métallisée s'étend sur deux avancées définies à partir d'un même côté concave;
- la face de réflexion présente globalement une courbure parabolique;
- la face de réflexion présente des stries circulaires de sorte à simuler une lentille de Fresnel.

L'invention se rapporte également à un véhicule automobile équipé d'au moins un feu de signalisation tel que défini ci-dessus, ce feu de signalisation étant agencé de sorte à définir des angles de visibilité latérale intérieure et frontale extérieure, par rapport à un plan de symétrie centrale du véhicule, respectivement au moins égal à 80 et 45°. Avantageusement, le feu de signalisation est alors positionné sensiblement en alignement avec deux autres projecteurs de lumière qui l'encadrent par des formes convexes adaptées de sorte à épouser latéralement les côtés concaves de l'écran du feu de signalisation.

Dans le présent texte, les qualificatifs « frontal », « latéral » et « antérieur », se rapportent aux localisations d'éléments par rapport aux équipements d'un feu de signalisation d'un véhicule automobile positionnés en utilisation standard. Le qualificatif « vertical » se rapporte à un élément qui s'étend dans une direction parallèle aux forces de gravité localisées à l'endroit de cet élément, et le qualificatif « horizontal » correspond à une direction ou un plan perpendiculaire à la direction verticale. Les qualificatifs « avant» et « arrière » se réfèrent à la position relative d'éléments du feu de signalisation selon le sens de la lumière diffusée par le feu de signalisation. Sur les figures, des éléments identiques sont repérés par un même signe de référence qui renvoie au(x) passage(s) du texte qui le définisse(nt).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue supérieure d'un véhicule automobile avec les angles de visibilité selon la règlementation (déjà commentée) ;
- la figure 2, une vue frontale d'un ensemble de projecteurs intégrant un feu de signalisation selon l'invention;
- la figure 3, une vue schématique d'un écran translucide de feu de signalisation selon l'invention en forme de sablier projeté dans le plan de cette figure;
- la figure 4, une vue frontale d'un exemple de réalisation d'un réflecteur de feu de signalisation selon l'invention illustré en figure 2;
- la figure 5, une vue en perspective d'un exemple de réalisation d'un écran translucide du feu de signalisation selon l'invention illustré en figure 2;
- la figure 6, une vue frontale du feu de la figure 2 selon un angle de visibilité égal à 45°, et
- la figure 7, une vue latérale du feu de la figure 2 selon un angle de visibilité égal à 80°.

### DESCRIPTION DÉTAILLÉE

Le feu de signalisation 2 de la figure 1 est présenté en détail sur la figure 2 comme un exemple de feu selon l'invention dans un ensemble de projecteurs 20. Cet ensemble 20 comporte, enchâssés dans un socle 10, deux feux d'éclairage 11 et 12 entourant le feu de signalisation 2, un feu de signalisation de direction (dit clignotant) dans l'exemple.

La forme biconcave du feu 2 vient en complément des formes convexes des deux feux 11 et 12. Le feu de signalisation 2 présente ainsi quatre avancées en pointe 21 à 24 qui s'étendent entre les côtés opposés concaves 2R et les côtés opposés sensiblement linéaires 2L en vue frontale.

Dans ces conditions, le feu de signalisation 2 comble les espaces laissés libres par les deux feux 11 et 12 et le socle 10. Ce feu 2 comporte un écran translucide 2A de diffusion de la lumière, composé essentiellement de lamelles 25 s'étendant frontalement selon une forme globale en sablier.

L'écran translucide 2A est schématisé sur la figure 3 afin de définir ses principales caractéristiques géométriques par une configuration en forme de sablier 2s projetée sur le plan de la figure. Dans cette configuration projetée, les avancées en pointe 21 à 24 (cf. figure 2) sont des zones sensiblement triangulaires, limitées par les lignes (en traits pointillés sur la figure) joignant les sommets S1, S2 des côtés concaves 2R aux points milieu L1, L2 des côtés linéaires 2L. Les côtés concaves 2R reliés aux côtés linéaires 2L forment le contour « C » de l'écran translucide 2A en forme de sablier. Des zones d'extrémité Z1 à Z4 peuvent être définies à proximité des pointes des avancées respectives 21 à 24.

Une distance minimale Dm est définie entre les sommets S1 et S2 des côtés concaves 2R situés de part et d'autre d'un axe principal symétrique ZZ' du sablier 2s, qui s'étend perpendiculairement à la distance Dm. De plus, un plan traversant P_{T} est défini comme s'étendant perpendiculairement à la surface du sablier 2s et passant par exemple par la distance minimale Dm.

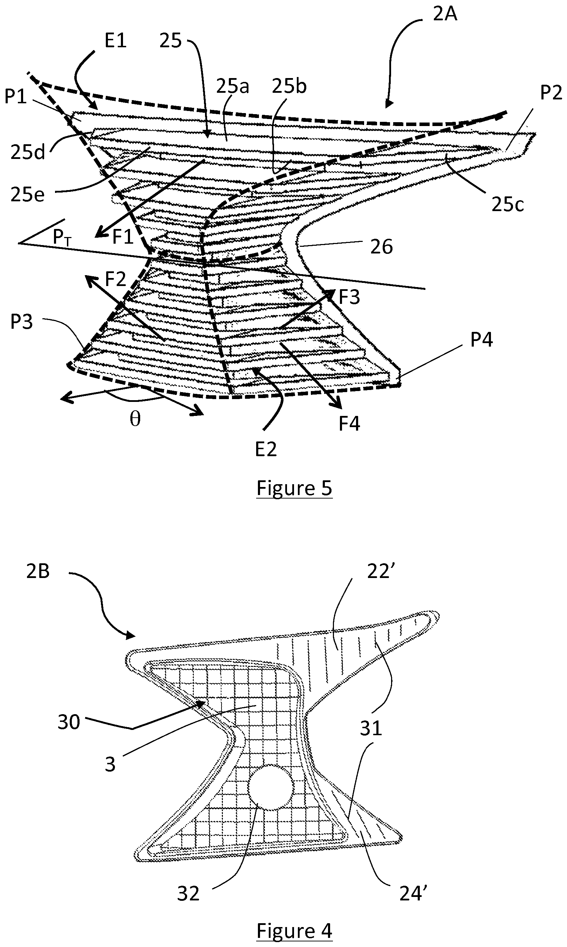

Dans un feu de signalisation selon l'invention (tel que celui illustré en figure 2), l'écran translucide 2A est couplé à un réflecteur 2B, tel que celui représenté par la vue frontale de la figure 4. Le réflecteur 2B adopte donc également un même contour en forme de sablier 2s (cf. figure 3) que l'écran translucide 2A tout en conservant une face de réflexion de courbure classiquement parabolique. Cette face de réflexion est recouverte partiellement d'une matrice 30 de cellules élémentaires bombées 3, multipliant ainsi la réflexion de la lumière.

Pour des raisons d'encombrement, il est possible qu'une partie 31 du réflecteur 2B ne puisse accueillir de cellules 3. Dans l'exemple illustré, cette partie 31 s'étend sur les avancées 22', 24' correspondant sensiblement aux avancées 22 et 24 d'un côté concave 2R du sablier 2s (cf. figure 3) ou de l'écran 2A (cf. figure 2). La partie 31 concernée est avantageusement métallisée pour assurer une bonne réflexion de la lumière.

La lumière émise par une source 32, considérée comme ponctuelle, se réfléchit sur les cellules 3 et la partie métallisée 31 du réflecteur 2B pour être diffusée ensuite par l'écran translucide 2A. La structure de cet écran translucide 2A, déjà présenté en référence à la figure 2, est plus précisément illustrée par la vue en perspective de la figure 5 en se référant également aux indications géométriques portées par le schéma de la figure 3.

Dans cet écran 2A, les lamelles 25 se projettent à partir d'un support de base 26 s'étendant également selon un contour semblable au contour « C » en forme de sablier 2s (cf. figure 3). Chaque lamelle 25 comporte deux faces principales polygonales 25a et 25b, ici quadrilatères, sensiblement parallèles au plan traversant P_{T} (cf. figure 3), reliées par une face frontale composée, dans cet exemple, de trois faces planes frontales juxtaposées 25c, 25d, et 25e.

Les faces principales présentent avantageusement des angles de dépouille afin d'améliorer le démoulage mais également afin d'augmenter l'ouverture angulaire d'inclinaison de la lumière diffusée. De plus, les faces principales et frontales sont préalablement grainées afin d'améliorer la diffusion de la lumière. Les faces frontales 25c à 25e s'inscrivent dans deux enveloppes coniques E1 et E2 s'évasant de manière opposée, conformément à une forme sensiblement en sablier. Le grainage, de dimensionnement adapté aux dimensions des faces 25a à 25e, renforce la diffusion de la lumière et augmente ainsi l'efficacité des lamelles. La quatrième face de chaque lamelle 25 est solidaire du support de base 26.

Ces lamelles 25 assurent une diffusion renforcée de la lumière issue de la source lumineuse 32 (cf. figure 4), en particulier jusqu'aux pointes P1 à P4 des avancées 21 à 24 (cf. figures 2 et 3), ce qui améliore l'efficacité de cette diffusion dans ces avancées et donc selon les angles de visibilité frontale intérieure a1 et latérale extérieure a2 (cf. figure 1).

Dans l'exemple de réalisation, les lamelles 25 qui s'inscrivent dans l'enveloppe conique E1 présentent deux dernières faces frontales centrales 25e qui, au lieu de se projeter plus loin pour respecter une forme conique, se projettent au contraire de moins en moins loin à partir du support de base 26. La forme sphérique de la portion correspondante de l'enveloppe E1 qui en résulte est destinée à permettre une adaptation du feu de signalisation 2A à la conformation générale de l'ensemble de projection 20 (cf. figure 2).

La forme en sablier des enveloppes E1 et E2 permet de diffuser la lumière selon une ouverture angulaire d'inclinaison d'au moins ±15° par rapport au plan traversant P_{T} (flèches F1 et F2) - soit globalement sur plus de 30° d'ouverture angulaire -. Plus précisément, la conicité des enveloppes E1 et E2 est déterminée pour permettre une telle ouverture d'inclinaison sur plus de ±15°. De plus, la présence des lamelles 25 renforce la diffusion de la lumière dans l'ouverture angulaire d'inclinaison à travers les faces principales 25a et 25b de chaque lamelle 25 (cf. flèches F3 et F4). Et les angles de dépouille des faces principales des lamelles inclinent la lumière diffusée (flèches F1, F2) et participent à une augmentation de l'ouverture angulaire d'inclinaison.

La forme conique des enveloppes E1 et E2 permet également de diffuser la lumière selon une ouverture angulaire de balayage « θ » supérieure à 125° dans un plan parallèle au plan traversant P_{T}, et même sensiblement supérieure à 125°. Une fois le feu de signalisation 2 (cf. figure 2) installé sur un véhicule, cette ouverture angulaire de balayage « θ » est adaptée pour permettre une ouverture angulaire au moins égal à 45° en angle de visibilité frontale intérieure a1 et au moins égal à 80° en angle de visibilité latérale extérieure a2 (cf. figure 1) dans le plan traversant P_{T} (cf. figure 3). La configuration polygonale des lamelles 25 permet d'orienter la diffusion de la lumière en particulier dans les avancées 21 à 24 (cf. figure 2) de l'écran 2A.

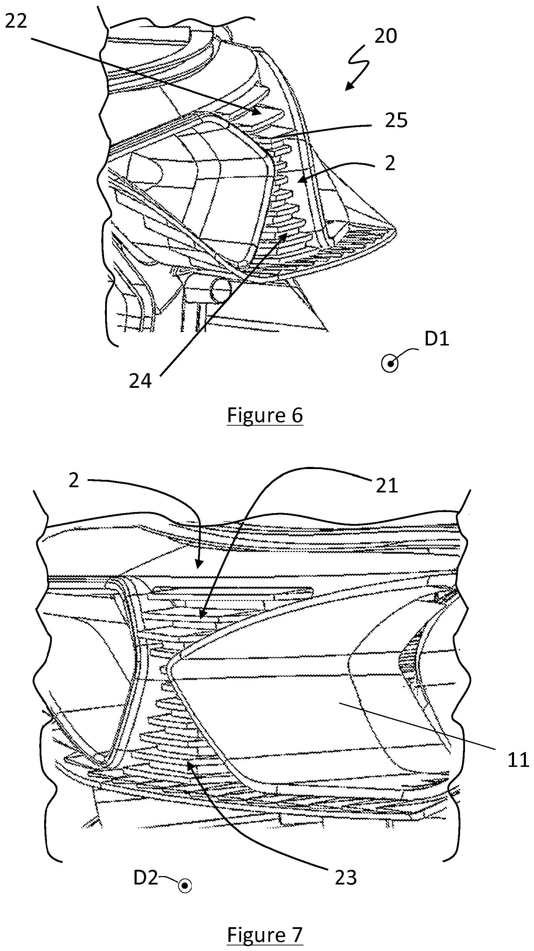

La figure 6 montre une vue frontale de l'ensemble de projecteurs 20 selon la direction D1 de vision V1 (cf. figure 1), c'est-à-dire selon l'angle de visibilité égal à 45°. ll apparaît que les lamelles 25 du feu de signalisation 2 sont visibles et orientées dans les deux avancées 22 et 24 de sorte à fournir une visibilité frontale a1 supérieure à 45°, et donc en conformité avec la réglementation.

Et la figure 7 montre une vue latérale de l'ensemble de projecteurs 20 dans la direction D2 de vision V2 (c figure 1), c'est-à-dire selon un angle de visibilité latérale égal à 80°. Là encore, les lamelles 25 sont visibles et orientées dans les deux avancées 21 et 23 pour permettre une visibilité latérale a2 supérieure à l'angle réglementaire égal à 80°.

L'invention n'est pas limitée aux exemples de réalisation décrits et représentés. Ainsi, l'écran translucide du feu de signalisation peut comporter des faces avant continues et sans lamelle, formant les avancées en pointe.

Par ailleurs, dans le cas où l'écran possède des lamelles, cellles-ci peuvent être plus rapprochées les unes des autres dans les portions les plus évasées du sablier - et donc dans les avancées en pointe - et plus espacées dans la portion centrale autour de la distance minimale entre les côtés concaves.

En outre, les lamelles peuvent comporter plus de trois faces hors la face fixée sur l'écran, ou seulement deux faces, ou encore une seule face de forme arrondie. Ces lamelles peuvent également comporter plusieurs faces frontales, ces faces frontales peuvent être planes et perpendiculaires aux faces principales, ou inclinées ou encore arrondies.

Par ailleurs, les lamelles peuvent être grainées ou non, par exemple alternativement une lamelle sur deux.

## Revendications

1. Feu de signalisation (2) comportant une source de lumière (32) positionnée entre un écran translucide (2A) de diffusion de la lumière issue de ladite source (32) et une face arrière formant un réflecteur (2B), **caractérisé en ce que** l'écran translucide (2A) présente globalement une forme en sablier (2s) s'étendant sur des faces avant s'évasant de manière opposée et s'inscrivant dans des enveloppes (E1, E2) au moins partiellement coniques s'appuyant sur un contour biconcave (C; 2R, 2L) définissant, de part et d'autre d'un axe principal (ZZ') du sablier (2s), deux côtés concaves opposés (2R) séparés d'une distance minimale (Dm) par leur sommet (S1, S2) et délimitant quatre avancées en pointe (21 à 24), en liaison avec deux autres côtés opposés (2L) reliant les deux côtés concaves (2R), et **en ce que** les enveloppes (E1, E2) des faces avant présentent une conicité déterminée de sorte que la lumière diffusée par ledit écran (2A) est visible selon une ouverture angulaire d'inclinaison (F1, F2) d'au moins ±15° par rapport à un plan traversant (P_{T}) perpendiculaire à l'axe principal (ZZ'), et selon une ouverture angulaire de balayage (θ) au moins égale à 125° dans le plan traversant (P_{T}), dans lequel l'écran translucide (2A) présente des lamelles de diffusion (25) de la lumière agencées sensiblement parallèlement au plan traversant (P_{T}) à partir d'une face de arrière de support dudit écran (2A), chaque lamelle (25) comportant une face avant (25c, 25d, 25e) s'inscrivant dans l'une des enveloppes (E1, E2) au moins partiellement coniques, et dans lequel chaque lamelle de diffusion (25) présente une forme polyédrique comportant deux faces principales (25a, 25b) sensiblement parallèles et polygonales reliées par une face avant frontale et comportant au moins deux faces planes juxtaposées (25c, 25d, 25e).

2. Feu de signalisation selon la revendication précédente, dans lequel les faces principales (25a, 25b) des lamelles (25) présentent des angles de dépouille.

3. Feu de signalisation selon l'une quelconque des revendications 1 ou 2, dans lequel au moins une lamelle de diffusion (25) présente des faces (25a à 25e) grainées.

4. Feu de signalisation selon l'une quelconque des revendications 1 à 3, dans lequel le réflecteur (2B) présente également une forme de sablier (2s) à quatre avancées en pointe semblables à celles (21 à 24) de l'écran translucide (2A) délimitant une face de réflexion formée au moins partiellement d'une matrice (30) de cellules élémentaires bombées (3).

5. Feu de signalisation selon la revendication précédente, dans lequel, la face de réflexion étant formée partiellement de la matrice (30), une portion métallisée (31) est formée sur le reste du réflecteur en complément de la matrice (30).

6. Feu de signalisation selon la revendication précédente, dans lequel la portion de face métallisée (31) s'étend sur deux avancées (22', 24') définies à partir d'un même côté concave (2R) du sablier (2s).

7. Feu de signalisation selon l'une quelconque des revendications 1 à 3, dans lequel le réflecteur (2B) présente des stries circulaires de sorte à simuler une lentille de Fresnel.

8. Véhicule automobile (1), **caractérisé en ce qu'**il est équipé d'au moins un feu de signalisation (2) selon l'une quelconque des revendications précédentes, ce feu de signalisation (2) étant agencé de sorte à définir des angles de visibilité latéral (a2) et frontal (a1), par rapport à un plan de symétrie centrale (P-P') du véhicule, respectivement au moins égal à 80° et 45°.

## Patentansprüche

1. Signalleuchte (2) mit einer Lichtquelle (32), die zwischen einem lichtdurchlässigen Schirm (2A) zur Streuung des von der Quelle (32) ausgehenden Lichts und einer einen Reflektor (2B) bildenden Rückseite positioniert ist, **dadurch gekennzeichnet, dass** der lichtdurchlässige Schirm (2A) insgesamt eine Sanduhrform (2s) aufweist, die sich über Vorderseiten erstreckt, die sich entgegengesetzt aufweiten und in zumindest teilweise konische Hüllen (E1, E2) eingeschrieben sind, die sich auf einen bikonkaven Umriss (C; 2R, 2L), die auf beiden Seiten einer Hauptachse (ZZ') der Sanduhr (2s) zwei gegenüberliegende konkave Seiten (2R) definieren, die durch ihren Scheitel (S1, S2) um einen minimalen Abstand (Dm) getrennt sind und vier spitze Vorsprünge (21 bis 24) begrenzen, die mit zwei anderen gegenüberliegenden Seiten (2L) verbunden sind, welche die beiden konkaven Seiten (2R) verbinden, und dass die Hüllen (E1, E2) der Vorderseiten eine bestimmte Konizität aufweisen, so dass das von dem Bildschirm (2A) gestreute Licht gemäß einer Neigungswinkelöffnung (F1, F2) von mindestens ±15° in Bezug auf eine Durchgangsebene (PT) senkrecht zur Hauptachse (ZZ') sichtbar ist, und mit einer Abtastwinkelöffnung () von mindestens 125° in der Durchgangsebene (PT), wobei der lichtdurchlässige Schirm (2A) Lichtstreulamellen (25) aufweist, die im Wesentlichen parallel zur Durchgangsebene (PT) ausgehend von einer tragenden Rückfläche des Schirms (2A) angeordnet sind, wobei jede Lamelle (25) eine Vorderfläche (25c, 25d, 25e) aufweist, die sich in eine der zumindest teilweise konischen Hüllen (E1, E2) einfügt, und wobei jede Streulamelle (25) eine polyedrische Form aufweist, die zwei im Wesentlichen parallele und polygonale Hauptflächen (25a, 25b) umfasst, die durch eine vordere Stirnfläche verbunden sind, und mindestens zwei nebeneinander liegende ebene Flächen (25c, 25d, 25e) umfasst.

2. . Signalleuchte nach dem vorhergehenden Anspruch, bei der die Hauptflächen (25a, 25b) der Lamellen (25) Hinterschneidungswinkel aufweisen.

3. . Ampel nach einem der Ansprüche 1 oder 2, wobei mindestens eine Streulamelle (25) genarbte Flächen (25a bis 25e) aufweist.

4. . Ampel nach einem der Ansprüche 1 bis 3, bei der der Reflektor (2B) ebenfalls eine Sanduhrform (2s) mit vier spitzen Vorsprüngen aufweist, die denen (21 bis 24) der lichtdurchlässigen Scheibe (2A) ähneln und eine Reflexionsfläche begrenzen, die zumindest teilweise aus einer Matrix (30) aus gewölbten Elementarzellen (3) gebildet ist.

5. . Signalleuchte nach dem vorhergehenden Anspruch, bei der, da die Reflexionsfläche teilweise aus der Matrix (30) gebildet ist, ein metallisierter Abschnitt (31) auf dem Rest des Reflektors in Ergänzung zur Matrix (30) gebildet ist.

6. . Signalleuchte nach dem vorhergehenden Anspruch, wobei sich der metallisierte Flächenabschnitt (31) über zwei Vorsprünge (22', 24') erstreckt, die von einer gleichen konkaven Seite (2R) der Sanduhr (2s) aus definiert sind.

7. . Signalleuchte nach einem der Ansprüche 1 bis 3, wobei der Reflektor (2B) kreisförmige Rillen aufweist, so dass eine Fresnel-Linse simuliert wird.

8. . Kraftfahrzeug (1), **dadurch gekennzeichnet, dass** es mit mindestens einer Signalleuchte (2) nach einem der vorhergehenden Ansprüche ausgestattet ist, wobei diese Signalleuchte (2) so angeordnet ist, dass sie seitliche (a2) und frontale (a1) Sichtwinkel in Bezug auf eine zentrale Symmetrieebene (P-P') des Fahrzeugs definiert, die mindestens 80° bzw. 45° betragen.

## Claims

1. A signal light (2) comprising a light source (32) positioned between a translucent screen (2A) for diffusing the light coming from said source (32) and a rear face forming a reflector (2B), **characterized in that** the translucent screen (2A) has overall an hourglass shape (2s) extending over front faces flaring out in an opposite manner and being inscribed in envelopes (E1, E2) which are at least partially conical and resting on a biconcave contour (C; 2R, 2L) defining, on either side of a main axis (ZZ') of the hourglass (2s), two opposite concave sides (2R) separated by a minimum distance (Dm) by their apex (S1, S2) and delimiting four pointed overhangs (21 to 24), in connection with two other opposite sides (2L) connecting the two concave sides (2R) and **in that** the envelopes (E1, E2) of the front faces have a conicity determined so that the light diffused by said screen (2A) is visible according to an angular tilt opening (F1, F2) of at least ±15° with respect to a through plane (PT) perpendicular to the main axis (ZZ') and according to a scanning angular aperture () at least equal to 125° in the through plane (PT), wherein the translucent screen (2A) has light-scattering lamellae (25) arranged substantially parallel to the through plane (PT) from a supporting back face of said screen (2A), each lamella (25) comprising a front face (25c, 25d, 25e) fitting into one of the at least partially conical envelopes (E1, E2), and in which each diffusion lamella (25) has a polyhedral shape comprising two substantially parallel and polygonal main faces (25a, 25b) connected by a front face and comprising at least two juxtaposed flat faces (25c, 25d, 25e).

2. A signal light according to the preceding claim, wherein the main faces (25a, 25b) of the slats (25) have draft angles.

3. The traffic signal according to any one of claims 1 or 2, wherein at least one diffusion lamella (25) has grained faces (25a to 25e).

4. A signal light according to any one of claims 1 to 3, wherein the reflector (2B) also has an hourglass shape (2s) with four pointed projections similar to those (21 to 24) of the translucent screen (2A) delimiting a reflection face formed at least partially of a matrix (30) of domed elementary cells (3).

5. A signal light according to the preceding claim, wherein, the reflection face being formed partially of the matrix (30), a metallized portion (31) is formed on the remainder of the reflector in addition to the matrix (30).

6. The signal light of the preceding claim, wherein the metallized face portion (31) extends over two overhangs (22', 24') defined from a same concave side (2R) of the hourglass (2s).

7. The traffic signal according to any one of claims 1 to 3, wherein the reflector (2B) has circular striations so as to simulate a Fresnel lens.

8. Motor vehicle (1), **characterized in that** it is equipped with at least one signal light (2) according to any one of the preceding claims, this signal light (2) being arranged so as to define lateral (a2) and frontal (a1) visibility angles, with respect to a central plane of symmetry (P-P') of the vehicle, respectively at least equal to 80° and 45°.
